# EUROPEAN PATENT APPLICATION

(11) **EP 4 636 679 A1**
(43) Date of publication of application: **22.10.2025**
(21) Application number: 23903761.7
(22) Date of filing: 08.11.2023
(51) Int. Cl.: G06Q 50/10, G06Q 50/26, G08B 25/00, G08B 25/14, G08B 29/12, H04H 60/29

(54) **MARITIME SURVEILLANCE SYSTEM**

(30) Priority: 12.12.2022 KR 20220172659
(71) Applicant: Korea Institute of Ocean Science & Technology, Busan 49111 (KR)
(72) Inventor: LIM, Chang Hyuck, Daejeon 34201 (KR); KIM, Kyong Hwan, Daejeon 34061 (KR); CHOI, Jong Su, Daejeon 34094 (KR); KO, Tae Kyeoung, Jeju-si, Jeju-do 63174 (KR); KIM, Gil Won, Sejong 30101 (KR); HA, Yoon Jin, Daejeon 34073 (KR); CHO, Su Gil, Daejeon 34961 (KR); PARK, Ji Yong, Daejeon 34198 (KR); YEOM, Dong Sun, Jeju-si, Jeju-do 63088 (KR)
(74) Representative: EP&C
(86) International application number: PCT/KR2023/017852
(87) International publication number: WO 2024/128558

(57) **Abstract**

A maritime surveillance device according to one embodiment may include a monitoring unit configured to monitor a maritime facility; and an information management unit configured to manage information related to maritime safety or facility safety.

## Description

### Technical Field

An embodiment of the present invention relates to a maritime surveillance device and method, and an administrator terminal that communicates with a maritime surveillance system. More specifically, it relates to the configuration and method of a maritime surveillance system for monitoring maritime safety during offshore green hydrogen production and transportation.

### Background Art

With the advancement of various energy infrastructures, the number of offshore facilities is increasing, and the development of systems for monitoring such facilities is actively underway.

Monitoring offshore facilities is critically important from a management perspective, and research in the field of communication technology is also actively progressing.

However, most surveillance systems are developed based on land-based operation standards, and thus there is a need for surveillance systems specifically designed for maritime environments.

### Disclosure

### Technical Solution

A maritime surveillance device according to an embodiment may include: a monitoring unit that monitors offshore facilities; and an information management unit that manages information related to maritime safety or facility safety.

The maritime surveillance device according to an embodiment may further include a broadcast management unit that manages broadcasts for safety.

The monitoring unit according to an embodiment may determine whether a maritime mobile object is approaching at least part of the offshore facility.

The broadcast management unit according to an embodiment may transmit risk information if a maritime mobile object approaches at least part of the offshore facility.

The broadcast management unit according to an embodiment may broadcast an alarm or warning if a maritime mobile object approaches at least part of the offshore facility.

The information management unit according to an embodiment may generate or store data resulting from the approach of the maritime mobile object.

An administrator terminal communicating with the maritime surveillance device according to an embodiment may include: a risk information reception unit that receives risk information related to maritime safety or facility safety; and an alarm unit that outputs a risk warning regarding maritime safety or facility safety, wherein the maritime surveillance device may monitor offshore facilities and manage information related to maritime safety or facility safety.

The risk information reception unit according to an embodiment may receive risk information from the maritime surveillance device if a maritime mobile object approaches at least part of the offshore facility.

The alarm unit according to an embodiment may output an alarm or warning according to the received risk information.

The administrator terminal according to an embodiment may further include a broadcast setting unit that provides settings for broadcasting alarms or warnings when a maritime mobile object approaches at least part of the offshore facility.

A maritime surveillance method according to an embodiment may include: monitoring offshore facilities; and managing information related to maritime safety or facility safety.

The maritime surveillance method according to an embodiment may further include managing broadcasts for safety.

The step of monitoring according to an embodiment may further include determining whether a maritime mobile object is approaching at least part of the offshore facility.

The step of managing broadcasts according to an embodiment may further include transmitting risk information if a maritime mobile object approaches at least part of the offshore facility.

The step of managing broadcasts according to an embodiment may further include broadcasting an alarm or warning if a maritime mobile object approaches at least part of the offshore facility.

The step of managing information related to maritime safety or facility safety according to an embodiment may further include generating or storing data resulting from the approach of the maritime mobile object.

### Description of Drawings

FIG. 1 is a block diagram of a maritime surveillance device according to an embodiment.
FIG. 2 is a diagram showing a screen for monitoring a hydrogen production facility system and a screen for monitoring maritime safety of the hydrogen production facility, both generated by the maritime surveillance device according to an embodiment.
FIG. 3 is a diagram illustrating a configuration for alarm broadcasting for a hydrogen production facility according to an embodiment.
FIG. 4 is a flowchart of a maritime surveillance method according to an embodiment.
FIG. 5 is a diagram showing a maritime surveillance method according to an embodiment.
FIG. 6 is a diagram illustrating the maritime surveillance device according to an embodiment.
FIG. 7 is a diagram illustrating the flow of the maritime surveillance method according to an embodiment.
FIG. 8 is a diagram illustrating the flow of maritime warning broadcasting in the maritime surveillance method according to an embodiment.
FIG. 9 is a diagram illustrating the flow of alarm or message transmission in the maritime surveillance method according to an embodiment.
FIG. 10 is a block diagram of an administrator terminal according to an embodiment.

### Mode for Invention

Hereinafter, preferred embodiments of the present invention will be described in detail with reference to the accompanying drawings.

However, the technical spirit of the present invention is not limited to the embodiments described and may be implemented in various different forms. Within the scope of the technical spirit of the present invention, one or more components among the embodiments may be selectively combined or replaced.

Also, the terms (including technical and scientific terms) used in the embodiments of the present invention, unless clearly defined otherwise, may be interpreted according to their generally understood meanings by those of ordinary skill in the art to which the present invention belongs. Commonly used terms such as those defined in dictionaries may be interpreted based on the contextual meaning in the related technical field.

Furthermore, the terms used in the embodiments of the present invention are for the purpose of describing the embodiments and are not intended to limit the present invention.

In this specification, unless otherwise specifically stated, the singular form may include the plural. Expressions such as "at least one of A, B, and C" may include all possible combinations of one or more of A, B, and C.

In addition, to describe the components of the embodiment, terms such as first, second, A, B, (a), (b), etc., may be used. These terms are only for distinguishing one component from another and do not limit the nature, order, or sequence of the corresponding components.

Further, when a component is described as being "connected," "coupled," or "linked" to another component, it may include both cases of being directly connected, coupled, or linked and cases of being indirectly connected via another component.

When it is described that a component is "on (above)" or "under (below)" another component, such descriptions include not only cases where the components are in direct contact but also cases where one or more other components are formed or arranged between them. Additionally, the expression "on (above)" or "under (below)" may include both upward and downward directions based on a component.

Hereinafter, the embodiments will be described in detail with reference to the accompanying drawings, wherein the same reference numerals will be assigned to the same or corresponding components regardless of the figure numbers, and redundant descriptions thereof will be omitted.

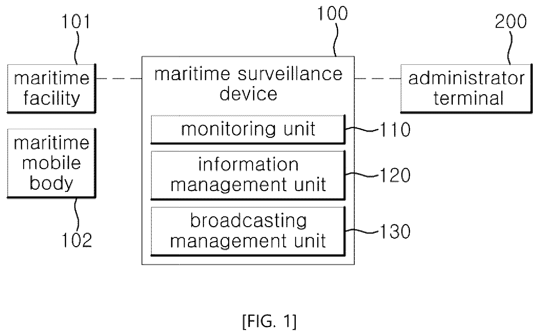

FIG. 1 is a block diagram of a maritime surveillance device according to an embodiment.

According to an embodiment, the maritime surveillance device (100) may include a monitoring unit (110) that monitors a maritime facility (101), an information management unit (120) that manages information related to maritime safety or facility safety, and a broadcasting management unit (130) that manages safety-related broadcasting.

The maritime surveillance device (100) may include a maritime surveillance system for monitoring maritime safety during hydrogen production and transportation using ocean renewable energy (e.g., wave power, offshore wind power, etc.) at offshore structures (or platforms) and maritime transportation pipelines.

The maritime surveillance device (100) may include at least a part of computing devices or communication devices. The maritime surveillance device (100) or its components may include at least some of the components described in the specification and may perform at least part of the operations described in the specification.

According to an embodiment, the monitoring unit (110) may detect whether a maritime mobile body (102) approaches at least a portion of the maritime facility (101). The maritime mobile body (102) may include ships, maritime markers, humans, etc.

According to an embodiment, when the maritime mobile body (102) approaches at least a portion of the maritime facility (101), the broadcasting management unit (130) may transmit risk information.

The broadcasting management unit (130) may transmit risk information to an administrator terminal (200), etc. The administrator terminal (200) may include a terminal owned by a manager or supervisor of the maritime facility (e.g., hydrogen production facility).

According to an embodiment, the broadcasting management unit (130) may broadcast an alarm or warning when the maritime mobile body (102) approaches at least a portion of the maritime facility (101).

According to an embodiment, the information management unit (120) may generate or store data corresponding to the approach of the maritime mobile body (102).

The maritime surveillance device (100) or maritime facility (101) may include at least a part of components such as a VHF antenna, UHF antenna, radar antenna, VHF-DSC transceiver, VHF equipment (microphone), V-PASS receiver, power line, AC/DC converter, UTP cable, CCTV, catalyst switch, video storage device (NVR), video analysis device, monitor, Location Information Integration Server, location and track management DB, and location analysis software.

The maritime surveillance device (100) may analyze maritime facilities and submarine cables, analyze hydrogen production facilities and hydrogen transport pipes, and display/provide electronic map situations.

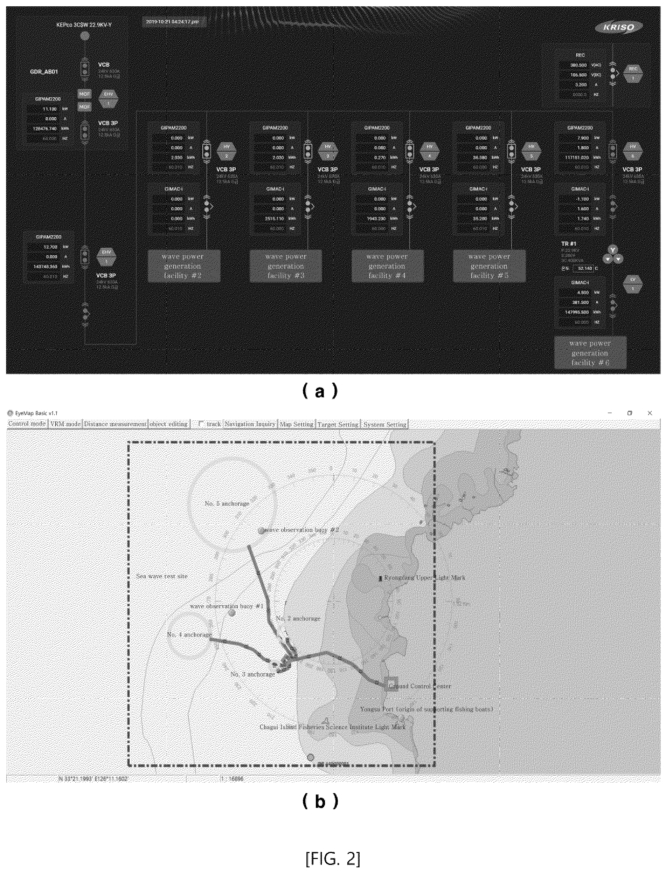

FIG. 2 is a diagram illustrating a screen for monitoring a hydrogen production facility system and a screen for monitoring maritime safety of the hydrogen production facility, both generated by a maritime surveillance device according to an embodiment.

Referring to FIG. 2(a), a screen for monitoring the hydrogen production facility system generated by the maritime surveillance device can be seen.

According to an embodiment, the maritime surveillance device may perform a maritime safety control support function for an offshore structure (platform) for offshore green hydrogen production and transportation.

The maritime surveillance device may include or be connected to a display. The maritime surveillance device may display at least some of the components described in this specification, or transmit them to a display, or output them through the display. The display may include the display of an administrator terminal.

The maritime surveillance device can provide a screen (or display) for displaying the structures for offshore green hydrogen production and transportation, and the structures for offshore green hydrogen production and transportation, which differentiate the maritime transportation pipelines on the electronic nautical chart.

The maritime surveillance device may newly add and manage symbols/images/forms/features specialized for green hydrogen facilities, which are not present in the S-57/52 data and display standards used in electronic nautical charts.

The maritime surveillance device may display offshore structures/facilities for offshore green hydrogen production and transportation, and maritime transport pipelines, in the form of symbols and images, and may display/output the connection statuses of major system states (or at least some of their mutual statuses) using colors. For example, green may indicate a normal state, yellow may indicate a caution state, and red may indicate an abnormal state.

The maritime surveillance device can periodically check maritime vehicles (e.g., ships) approaching maritime structures/facilities for the production and transportation of offshore green hydrogen and maritime transportation pipelines through radar, AIS devices, VPASS devices, etc., and transmit/output an alarm to a display/sound output device (e.g., speaker) when approaching.

According to an embodiment, the maritime surveillance device may manage data for the operation of offshore structures/platforms/facilities for offshore green hydrogen production and transportation.

The managed data may include information on approaching ships to offshore facilities, safety zone information for offshore facilities such as hydrogen transport facilities, alarm histories, status information, system status histories, and system configuration/management information.

The maritime surveillance device may allow the administrator terminal to set the types and periods of data to be linked with organizations located in the hydrogen production complex.

Referring to FIG. 2(b), a screen for monitoring maritime safety of the hydrogen production facility generated by the maritime surveillance device can be seen.

According to an embodiment, the maritime surveillance device may monitor ship positions using ship position communication and sensing devices.

The maritime surveillance device may receive ship information in surrounding waters using AIS devices.

The maritime surveillance device may receive fishing vessel information in surrounding waters using VPASS devices.

The maritime surveillance device may receive information on ships not equipped with AIS or VPASS using radar devices.

The maritime surveillance device may perform decryption processing in the case of encrypted ship position information.

The maritime surveillance device may store/manage ship-related information as files or in a database.

The maritime surveillance device may track vessels of real-time safety interest using the real-time position information of ships.

The maritime surveillance device may provide a user interface on the administrator terminal/display, enabling users to inquire/identify past locations and tracks of ships using stored/managed ship information, and thereby check which ship caused an incident at a specific maritime location.

The maritime surveillance device may confirm the transportation status or facility condition by applying maritime standard communication to ships and offshore facilities directly involved in hydrogen production, when necessary.

According to an embodiment, the maritime surveillance device may provide a visual monitoring scheme for maritime ship monitoring related to hydrogen production and transportation safety based on international standard electronic nautical charts.

The maritime surveillance device may retrieve and display S-57 electronic nautical chart data based on international standards, and may additionally apply separately standardized symbols related to hydrogen production and transportation safety.

The maritime surveillance device may set safety zones for offshore structures and maritime transport pipelines for offshore green hydrogen production and transportation, and may display/transmit the configured zones/data.

The maritime surveillance device may display the collected ship location information in real time on an electronic nautical chart to monitor ships that intrude into areas of interest such as hydrogen production and transportation facilities.

The maritime surveillance device may analyze the risks of ships or persons approaching the safety zones set on offshore structures and pipelines for offshore green hydrogen production and transportation, and if intrusion is determined, may display an alarm or transmit a short message/SMS to the administrator terminal. The SMS may include images or text about the ship or person and the location of approach.

The maritime surveillance device may register/store/manage information on fishing vessels of interest operating in fishing ports and grounds around the hydrogen production complex, and may track/confirm their movement routes in real time.

The maritime surveillance device may prevent and respond to cable damage by analyzing whether ships are crossing maritime transport pipelines.

The maritime surveillance device may retrieve/confirm monitoring information on specific ships or ships in specific regions and provide/store statistics via a display.

The maritime surveillance device may display the location history (e.g., tracks) of ships and buoys on an electronic nautical chart (or on a screen/display).

The maritime surveillance device may store alarm information on approaching ships and provide/store statistics over time.

The maritime surveillance device may retrieve/manage/confirm statistics and tracks of ships navigating across at least part of offshore facilities (e.g., maritime transport pipelines).

The maritime surveillance device may verify unidentifiable maritime moving objects (e.g., maritime objects) that cannot be identified through AIS, VPASS, RADAR devices via CCTV (e.g., during daytime). The maritime surveillance device may be equipped with CCTV, or connected to CCTV installed at or near offshore facilities.

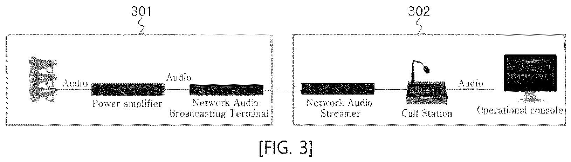

FIG. 3 is a diagram illustrating a configuration for alarm broadcasting regarding a hydrogen production facility according to an embodiment.

According to one embodiment, the maritime surveillance device may provide wave power generation test site alarm integration and maritime vessel alert broadcasting. The maritime surveillance device (302) may include a network audio streamer, call station, operation console, and the like. The offshore facility (301) may include an audio/sound output device (e.g., speaker), power amplifier, network audio broadcasting terminal, and the like. The maritime surveillance device (302) and the offshore facility (301) may be connected via optical communication or the like.

The maritime surveillance device may be connected to the offshore facility or to devices related to/connected with the offshore facility, and may periodically monitor or periodically check/store/manage the status (information/data) of the offshore facility or the devices related to/connected with the offshore facility.

The maritime surveillance device may periodically check the operational status of the hydrogen production facility, hydrogen transport pipelines, vessel monitoring system, CCTV, and alarm broadcasting system (e.g., remote broadcasting/VHF communication device), and may generate/transmit or trigger an alarm alert in case of failure.

The maritime surveillance device may periodically check the status of a device that stores/manages data such as alarm alerts, and may generate/transmit or trigger an alarm alert in case of failure.

The maritime surveillance device may store/manage/generate/transmit at least some information regarding database (DB) data usage, disk occupancy, information query monitoring, and the operational status of real-time data storage programs.

The maritime surveillance device can perform/provide a warning broadcast to vessels, etc. approaching the periphery of the maritime facility through speakers and broadcast amplifiers when there is a vessel, person, or object approaching at least a part of the maritime facility (e.g., an offshore structure for the production and transportation of offshore green hydrogen and maritime transportation pipelines) through speakers, etc.

The maritime surveillance device may provide a function for automatic warning broadcasting through settings configured by the control center safety manager (e.g., via an administrator terminal).

The maritime surveillance device may provide a user interface via the administrator terminal/display, allowing the administrator to select the speakers and power amplifiers.

The maritime surveillance device may provide voice synthesis (TTS: text-to-speech) for automatic alarm broadcasting based on the alert content input or configured by the administrator via the administrator terminal.

The maritime surveillance device may enable the control center safety manager to perform alert broadcasting to vessels equipped with VHF radios while monitoring vessel monitoring screens and CCTV via the screen of the display provided by the maritime surveillance device.

The maritime surveillance device may provide an SMS alert function to off-duty administrators (e.g., safety managers) via administrator terminals such as smartphones.

The maritime surveillance device may provide various alerts to the administrator terminal based on risk information (e.g., the approach level, image, and location information of maritime moving objects approaching the offshore facility).

The maritime surveillance device may control the administrator terminal or provide control information to the administrator terminal so that the alert volume increases as the approach level of the maritime moving object approaching the offshore facility increases (i.e., the closer the object is to the offshore facility, the higher the level). The levels may range from 0 to 10, etc. The distance corresponding to each level (e.g., level 0) may be configured via the administrator terminal.

Based on the level settings configured in the administrator terminal, if the approach level of the maritime moving object is at the highest level (e.g., level 10), the maritime surveillance device may automatically transmit at least some of the information on the offshore facility or on the maritime moving object approaching the offshore facility to terminal devices of safety management institutions of the offshore facility, such as security companies or the coast guard responsible for the offshore facility zone.

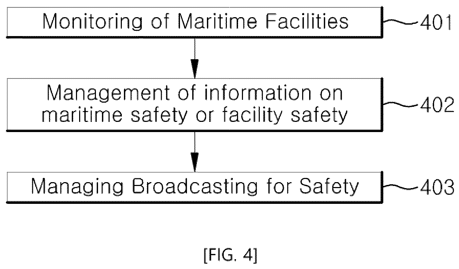

FIG. 4 is a flowchart illustrating a maritime surveillance method according to an embodiment.

According to an embodiment, each step of the maritime surveillance method may be performed by at least a part of the components of the maritime surveillance device described above or below.

In step (401), the maritime surveillance device may monitor the offshore facility. According to one embodiment, the maritime surveillance device may determine whether a maritime moving object is approaching at least a part of the offshore facility.

In step (402), the maritime surveillance device may manage information related to maritime safety or facility safety. According to one embodiment, the maritime surveillance device may generate or store data according to the approach of a maritime moving object.

In step (403), the maritime surveillance device may manage broadcasting for safety. According to one embodiment, when a maritime moving object approaches at least a part of the offshore facility, the maritime surveillance device may transmit risk information or broadcast an alarm or warning.

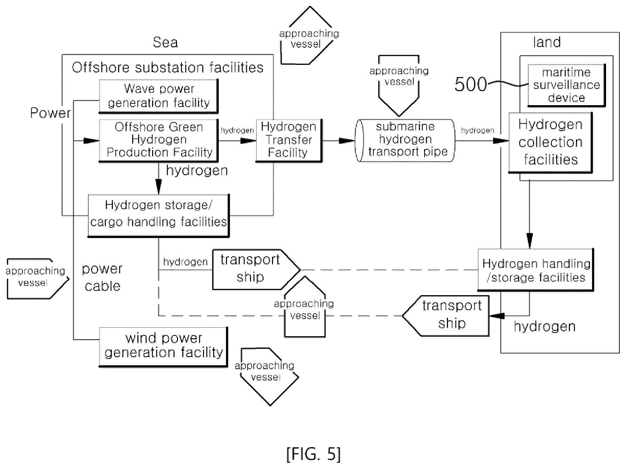

FIG. 5 is a diagram illustrating a maritime monitoring method according to an embodiment.

The maritime surveillance device (500) may be installed on land, and the offshore facility may include an offshore substation or a wind power generation facility. The offshore substation may include a wave power generation facility, offshore green hydrogen production facility, hydrogen transfer facility, hydrogen storage/unloading facility/subsea hydrogen transport pipe, power cable, hydrogen transport vessel (or hydrogen collection facility), and the like.

The maritime moving object may include a ship or vessel. The maritime surveillance device (500) may be communicatively/electrically/mechanically connected to the offshore facility or devices connected to the offshore facility using wireless or optical communication, etc.

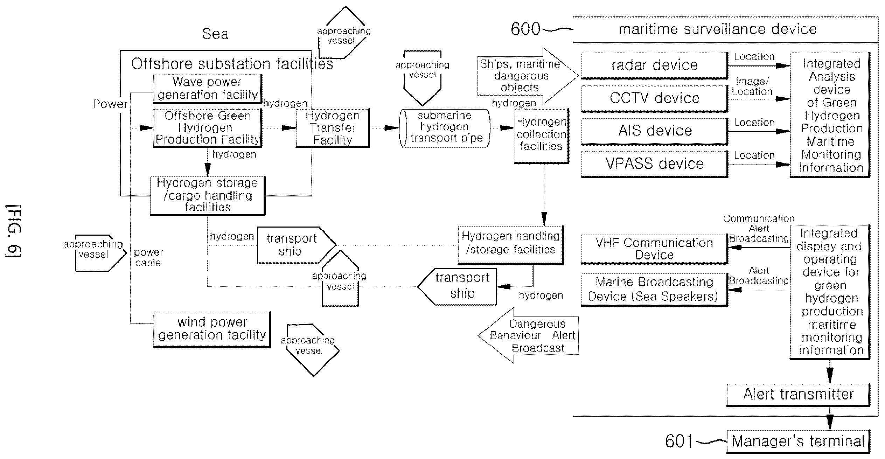

FIG. 6 is a diagram illustrating a maritime surveillance device according to an embodiment.

The components of the maritime surveillance device may include at least some of the following: radar device, CCTV device, AIS (Automatic Identification System) device, vessel pass/VPASS device, VHF (Very High Frequency) communication device, maritime broadcasting device, integrated analysis device for green hydrogen production maritime monitoring information, integrated display and operation device for green hydrogen production maritime monitoring information, and alarm transmission device.

The maritime surveillance device may receive/acquire images/locations of maritime moving objects or approaching vessels to the offshore facility through radar, CCTV, AIS, VPASS devices, etc. The maritime surveillance device may analyze at least a portion of the information on maritime moving objects that has been received/acquired, and generate information (e.g., risk information, danger warning) related to (alarm) broadcasting based on the analysis results.

The maritime surveillance device may transmit/output information on broadcasting through a VHF communication device and a maritime broadcasting device (e.g., marine speaker). The maritime surveillance device may transmit the generated broadcasting information to an output device disposed on or near the offshore facility being approached by the maritime moving object.

The disposed output device may output the broadcasting information using light, text, sound, etc. The output device may also output the information using standard international alerts. The warnings may include information alerting to approach hazards, adverse weather conditions, and so forth.

The maritime surveillance device may transmit/output automatically translated text/data of the configured broadcasting content to the output device based on information on the nationality/country/language of the maritime moving object. The maritime surveillance device may include a translator for translating into various languages.

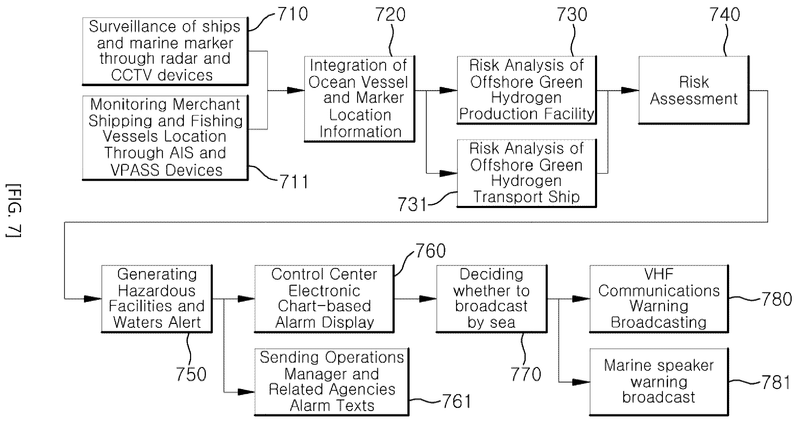

FIG. 7 is a diagram illustrating a flow of a maritime monitoring method according to an embodiment.

In step (710), the maritime surveillance device may monitor ships and maritime targets using radar and CCTV devices.

In step (711), the maritime surveillance device may monitor the location of maritime moving objects such as ships (e.g., merchant ships, fishing vessels) using AIS and VPASS devices.

In step (720), the maritime surveillance device may integrate and manage/store the location information of ships or maritime targets at sea.

In step (730), the maritime surveillance device may analyze risks to the offshore facility (e.g., offshore green hydrogen production facility) based on the stored/received/managed information. The stored/received/managed information may include at least part of all the information described in the specification. The maritime surveillance device may use big data analysis based on the stored/received/managed information to analyze risks to the offshore facility, including the level/degree of risk.

In step (731), the maritime surveillance device may analyze risks to a offshore green hydrogen transport ship based on the stored/received/managed information.

In step (740), the maritime surveillance device may assess the risk level of the maritime moving object based on the analysis result.

In step (750), the maritime surveillance device may generate danger zone and waterway warnings/risk information/danger alerts for the offshore facility approached by the maritime moving object.

In step (760), the maritime surveillance device may display/show alarm information on the control center's electronic nautical chart based on the generated information or alerts.

In step (761), the maritime surveillance device may transmit/send alarm messages, etc. to terminals of operators and relevant agencies based on the generated information or alerts.

In step (770), the maritime surveillance device may determine whether to perform maritime broadcasting (automatically) based on the settings of the administrator terminal.

In step (780), the maritime surveillance device may transmit warning broadcasts via VHF communication.

In step (781), the maritime surveillance device may transmit/output warning broadcasts using marine speakers or the like.

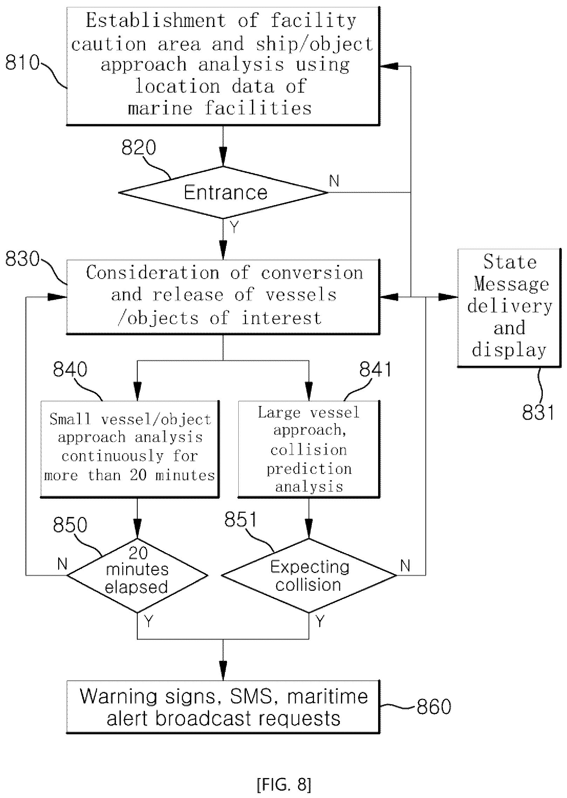

Fig. 8 is a diagram illustrating a flow of maritime warning broadcast according to an embodiment of the maritime monitoring method.

In step (810), the maritime surveillance device may set a caution zone/danger zone (for example, within a 100m radius from the maritime facility) for the maritime facility using the location data of the maritime facility, and analyze the approach of maritime moving objects (ships/objects).

In step (820), the maritime surveillance device may determine whether a maritime moving object has entered the caution zone/danger zone of the maritime facility.

In step (830), if the maritime moving object has entered the caution zone/danger zone of the maritime facility, the maritime surveillance device may review switching and releasing of the object of interest (ship/object).

In step (831), if the maritime moving object has not entered the caution zone/danger zone of the maritime facility, the maritime surveillance device may transmit or display a status message regarding the maritime facility or the maritime moving object.

In step (840), if the maritime moving object is a small vessel/object, the maritime surveillance device may continuously analyze/monitor the approach of the maritime moving object for a preset period of time (e.g., more than 20 minutes).

In step (841), if the maritime moving object is a large vessel, the maritime surveillance device may analyze the approach and possible collision of the maritime moving object using big data analysis or the like.

In step (850), if the maritime moving object is small, the maritime surveillance device may determine whether the preset period of time has elapsed.

In step (851), if the maritime moving object is large, the maritime surveillance device may determine whether a collision is expected.

In step (860), if the maritime moving object is small and the preset time has elapsed, or if the maritime moving object is large and a collision is expected, the maritime surveillance device may request/transmit/broadcast alert displays, SMS, maritime warning broadcasts, etc. (content/data/information/signals) regarding the maritime moving object.

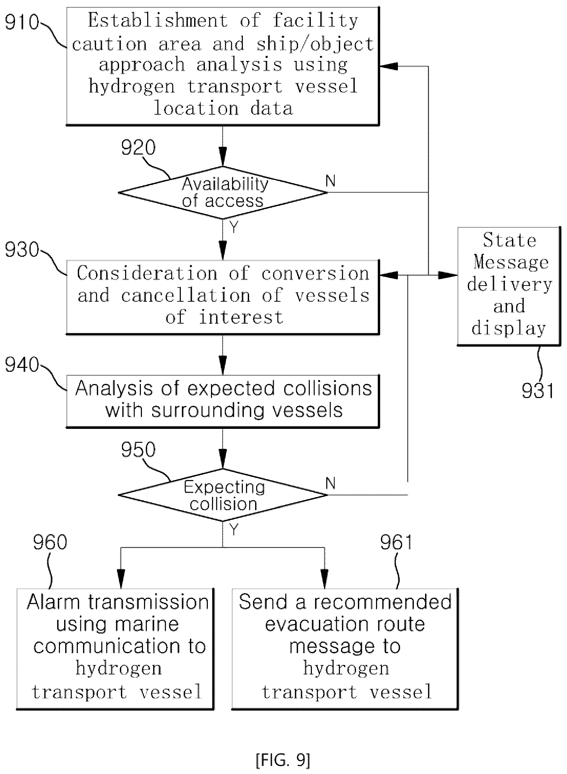

Fig. 9 is a diagram illustrating a flow of alarm or message transmission according to an embodiment of the maritime monitoring method.

In step (910), the maritime surveillance device may set a caution zone/danger zone (e.g., 100m radius from the maritime facility or based on distance to the maritime facility) for the maritime facility (e.g., hydrogen transport ship) using the location data of the maritime facility, and analyze the approach of a maritime moving object (ship/object) toward the maritime facility.

In step (920), the maritime surveillance device may determine whether the maritime moving object has approached/entered the caution zone/danger zone of the maritime facility.

In step (930), if the maritime moving object has entered the caution zone/danger zone of the maritime facility, the maritime surveillance device may review switching and releasing of the object of interest.

In step (931), if the maritime moving object has not entered/approached the caution zone/danger zone of the maritime facility, the maritime surveillance device may transmit or display a status message regarding the maritime facility or the maritime moving object.

In step (940), the maritime surveillance device may analyze the approach and possible collision of the maritime moving object near the maritime facility using big data analysis or the like.

In step (950), the maritime surveillance device may determine whether a collision is expected.

In step (960), if a collision is expected, the maritime surveillance device may transmit an alarm to the maritime facility (e.g., hydrogen transport ship) via maritime communication.

In step (961), if a collision is expected, the maritime surveillance device may transmit a recommended evacuation route to the maritime facility (e.g., hydrogen transport ship). The recommended evacuation route may include images or text. The recommended route may differ from the direction of the maritime moving object approaching the facility.

If the maritime facility is under the control of the maritime surveillance device, the maritime facility may be automatically controlled to move based on the recommended evacuation route.

The maritime surveillance device may also transmit the recommended evacuation route to the maritime moving object approaching the facility. The recommended evacuation route may include a route in a direction different from the approach direction of the maritime moving object.

If a collision is expected, the maritime surveillance device may transmit control information including at least a part of the recommended evacuation route to the maritime facility or to light/sound output devices installed at or near the facility, so that the evacuation route is output via light or sound.

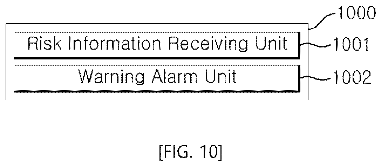

Fig. 10 is a block diagram of an administrator terminal according to an embodiment.

According to an embodiment, the administrator terminal (1000) communicating with the maritime surveillance device may include a risk information receiving unit (1001) for receiving risk information related to maritime safety or facility safety, and a warning alarm unit (1002) for outputting a risk warning related to maritime safety or facility safety.

The administrator terminal (1000) may include at least part of a computing device and may include a wireless communication device, a smartphone, a tablet PC, or the like. The administrator terminal (1000) can communicate with the maritime surveillance device via wireless communication or the like.

The maritime surveillance device monitors the maritime facility and manages information related to maritime safety or facility safety.

According to an embodiment, the risk information receiving unit (1001) may receive risk information from the maritime surveillance device when a maritime moving object approaches at least part of the maritime facility.

According to an embodiment, the warning alarm unit (1002) may output an alarm or warning according to the received risk information.

According to an embodiment, the administrator terminal (1000) may further include a broadcast setting unit (not shown) that provides settings for broadcasting the alarm or warning when a maritime moving object approaches at least part of the maritime facility.

The broadcast setting unit may provide a user interface for setting/selecting the text or level of the alarm or warning broadcast. The broadcast setting unit may provide recording for the alarm or warning broadcast. The broadcast setting unit may provide a user interface for setting/selecting the content of the warning.

The term "unit" used in this embodiment refers to a software or hardware component such as an FPGA (field-programmable gate array) or ASIC, and the "unit" performs certain functions. However, the term "unit" is not limited to software or hardware. The "unit" may be configured to reside in an addressable storage medium or may be configured to execute one or more processors. Therefore, as an example, the "unit" includes software components, object-oriented software components, class components, and task components, as well as processes, functions, attributes, procedures, subroutines, segments of program code, drivers, firmware, microcode, circuits, data, databases, data structures, tables, arrays, and variables. Functions provided within components and "units" may be combined into a smaller number of components and "units," or further separated into additional components and "units." Moreover, components and "units" may be implemented to execute one or more CPUs within a device or secure multimedia card.

Although the preferred embodiments of the present invention have been described above with reference to the drawings, those skilled in the art will understand that various modifications and changes may be made to the present invention without departing from the spirit and scope of the invention as defined in the appended claims.

## Claims

1. A maritime surveillance device comprising:
a monitoring unit configured to monitor a maritime facility; and
an information management unit configured to manage information related to maritime safety or facility safety.

2. The maritime surveillance device according to claim 1,
further comprising a broadcast management unit configured to manage broadcasts for safety.

3. The maritime surveillance device according to claim 1,
wherein the monitoring unit confirms whether a maritime moving object approaches at least part of the maritime facility.

4. The maritime surveillance device according to claim 2,
wherein the broadcast management unit transmits risk information when a maritime moving object approaches at least part of the maritime facility.

5. The maritime surveillance device according to claim 2,
wherein the broadcast management unit broadcasts an alarm or warning when a maritime moving object approaches at least part of the maritime facility.

6. The maritime surveillance device according to claim 3,
wherein the information management unit generates or stores data according to the approach of the maritime moving object.

7. An administrator terminal configured to communicate with a maritime surveillance device, comprising:
a risk information receiving unit configured to receive risk information related to maritime safety or facility safety; and
a warning alarm unit configured to output a risk warning related to maritime safety or facility safety,
wherein the maritime surveillance device monitors the maritime facility and manages information related to maritime safety or facility safety.

8. The administrator terminal according to claim 7,
wherein the risk information receiving unit receives risk information from the maritime surveillance device when a maritime moving object approaches at least part of the maritime facility.

9. The administrator terminal according to claim 7,
wherein the warning alarm unit outputs an alarm or warning according to the received risk information.

10. The administrator terminal according to claim 7,
further comprising a broadcast setting unit that provides settings for broadcasting the alarm or warning when a maritime moving object approaches at least part of the maritime facility.

11. A maritime surveillance method comprising:
a step of monitoring a maritime facility; and
a step of managing information related to maritime safety or facility safety.

12. The maritime surveillance method according to claim 11,
further comprising a step of managing broadcasts for safety.

13. The maritime surveillance method according to claim 11,
wherein the monitoring step further comprises a step of confirming whether a maritime moving object approaches at least part of the maritime facility.

14. The maritime surveillance method according to claim 12,
wherein the step of managing broadcasts further comprises a step of transmitting risk information when a maritime moving object approaches at least part of the maritime facility.

15. The maritime surveillance method according to claim 12,
wherein the step of managing broadcasts further comprises a step of broadcasting an alarm or warning when a maritime moving object approaches at least part of the maritime facility.

16. The maritime surveillance method according to claim 13,
wherein the step of managing information related to maritime safety or facility safety further comprises:
a step of generating data according to the approach of the maritime moving object, or
a step of storing data according to the approach of the maritime moving object.
